# EUROPÄISCHE PATENTSCHRIFT

(11) **EP 0 931 246 B1**
(45) Veröffentlichungstag und Bekanntmachung des Hinweises auf die Patenterteilung: **21.11.2001**
(21) Anmeldenummer: 97938751.1
(22) Anmeldetag: 08.08.1997
(51) Int. Cl.: G01G 19/415, B65C 1/02, B65C 9/46

(54) **VERFAHREN ZUM WÄGEN UND ETIKETTIEREN VON WARENPACKUNGEN UND VORRICHTUNG ZUR DURCHFÜHRUNG DES VERFAHRENS**
METHOD AND DEVICE FOR WEIGHING AND LABELLING PACKAGES OF GOODS
PROCEDE ET DISPOSITIF POUR PESER ET ETIQUETER DES EMBALLAGES DE MARCHANDISES

(43) Veröffentlichungstag der Anmeldung: 28.07.1999
(73) Patentinhaber: Espera-Werke GmbH, 47058 Duisburg (DE)
(72) Erfinder: KORTHÄUER, Manfred, D-45478 Mülheim an der Ruhr (DE); DE MIRANDA, Guillaume, Roberto, NL-5941 JL Velden (NL)
(74) Vertreter: Sroka, Peter-Christian, Dipl.-Ing.
(86) Internationale Anmeldenummer: DE9701684
(87) Internationale Veröffentlichungsnummer: WO9908079

(56) Entgegenhaltungen:
- DE-A- 19 609 431
- US-A- 3 955 665
- US-A- 4 342 038
- US-A- 4 683 707

## Beschreibung

Die Erfindung betrifft ein Verfahren zum Wägen und Etikettieren von Warenpackungen mit den Merkmalen aus dem Oberbegriff des Patentanspruchs 1 sowie eine Vorrichtung zur Durchführung dieses Verfahrens mit den Merkmalen aus dem Oberbegriff des Patentanspruchs 9.

Derartige Verfahren und Vorrichtungen sind an sich bekannt. Die bekannten Verfahren werden mittels relativ aufwendig aufgebauter Vorrichtungen durchgeführt und dienen beispielsweise dazu, innerhalb einer Transportlinie oder hinter einer Verpackungsmaschine ankommende Warenpackungen zu wägen und den Preis auszuzeichnen. Die bekannten Vorrichtungen sind deshalb relativ aufwendig, weil im allgemeinen mehrere Transportbänder benötigt werden, um den Wägevorgang vom Vorgang des Etikettierens zu trennen. Dies erschien bisher deswegen notwendig, weil beim Etikettieren auf der Waage erhebliche Probleme auftraten. Durch die beim Etikettieren auftretende Druckbelastung der Waage kann vor allem, wenn schnell etikettiert werden soll und entsprechend harte Schläge auf die Waage einwirken, diese auf Dauer Schaden nehmen. Diese Schäden können sich darin zeigen, daß die Genauigkeit der Waage nachläßt oder daß sie bei Entlastung nicht ganz auf Null zurückgeht. Weiterhin wirken die beim Etikettieren entstehenden Erschütterungen der Waage noch eine gewisse Zeit nach. Da die Waage vor dem nächsten wägevorgang mechanisch und elektrisch zur Ruhe gekommen sein muß, sind die Anzahl von Wägungen, die pro Minute ausgeführt werden können, begrenzt.

In dem Dokument US-A-4,342,038 sind ein Verfahren und eine Einrichtung zum Wägen und Kennzeichnen von Warenpackungen mit Gewichts- oder anderen Angaben beschrieben, wobei die Warenpackungen auf einer Waagschale liegend mittels einer Druckvorrichtung beispielsweise einem Etikettendrucker und -applikator gekennzeichnet werden.

Der Erfindung liegt die Aufgabe zugrunde, ein Verfahren mit den Merkmalen aus dem Oberbegriff des Patentanspruchs 1 sowie eine Vorrichtung mit den Merkmalen aus dem Oberbegriff des Patentanspruchs 9 so auszugestalten, daß bei einem sehr kompakten, kostengünstigen und technisch wenig aufwendigen Aufbau der Vorrichtung das Wägeverfahren rasch und mit der geforderten Genauigkeit durchgeführt werden kann.

Die Lösung dieser Aufgabe geschieht verfahrensmäßig mit den Merkmalen aus dem kennzeichnenden Teil des Patentanspruchs 1 und vorrichtungsmäßig mit den Merkmalen aus dem kennzeichnenden Teil des Patentanspruchs 9.

Vorteilhafte Weiterbildungen der Erfindung sind in den abhängigen Ansprüchen beschrieben.

Die Erfindung geht von dem Grundgedanken aus, daß es durchaus möglich ist, auf der Waage selbst zu etikettieren, wenn durch besondere Maßnahmen dafür gesorgt wird, daß der Wägevorgang ungestört ablaufen kann und die Erschütterungen des Etikettiervorgangs mechanisch und elektrisch so abgedämpft werden, daß die Waage nach dem Wägen und Etikettieren in einer ausreichend kurzen Zeit wieder in den Ruhezustand zurückkehrt, so daß die nächste Warenpackung bearbeitet werden kann.

Wie weiter unten anhand eines Ausführungsbeispiels näher erläutert, gehören zu diesen besonderen Maßnahmen einerseits eine variable Steuerung der Transportbandgeschwindigkeit, die dafür sorgt, daß die Packung schnell zu- und abgeführt wird, aber während des Wägevorgangs und ggf. während des Etikettiervorgangs langsam transportiert wird. Dabei kann in besonders vorteilhafter Weise der ganze Bearbeitungsvorgang gestrafft werden, indem das aufzubringende Etikett bereits vor dem Wägevorgang mit den gewichtsunabhängigen Daten und erst nach Beendigung des Wägevorgangs mit den gewichtsabhängigen Daten bedruckt wird.

Zur Abdämpfung und Unterdrückung der durch den Etikettiervorgang ausgelösten Erschütterungen dienen einerseits mechanische Mittel in der Weise, daß die Lastaufnahmeeinrichtung, also die Waagschale, eine ausreichend große träge Masse besitzt, durch die die Erschütterungen zum Teil aufgefangen werden, und andererseits elektrische Mittel in Form eines Tiefpassfilters in der elektronischen Auswerteschaltung, dessen Grenzfrequenz so niedrig angesetzt wird, daß alle Störungen aufgrund von Erschütterungen der Waage durch den Transport- und den Etikettiervorgang unterdrückt bzw. minimiert werden.

Mit dem erfindungsgemäßen Verfahren und der erfindungsgemäßen Vorrichtung ist es möglich, mit geringem technischem Aufwand mittels eines einzigen Transportbandes Warenpackungen im Durchlauf zu wägen und zu etikettieren.

Im folgenden wird anhand der beigefügten Zeichnungen ein Ausführungsbeispiel für das erfindungsgemäße Verfahren und die erfindungsgemäße Vorrichtung näher erläutert.

### In den Zeichnungen zeigen:

Figur 1 in einer stark schematisierten Darstellung eine Vorrichtung zum Wägen und Etikettieren von Warenpackungen;

Figur 2 in einer ebenfalls schematisierten gegenüber Figur 1 vergrößerten Darstellung den Bereich II in Figur 1 dieser Vorrichtung;

Figur 3 in einem stark schematisierten Blockschaltbild die elektronische Auswerteschaltung der Vorrichtung nach den Figuren 1 und 2.

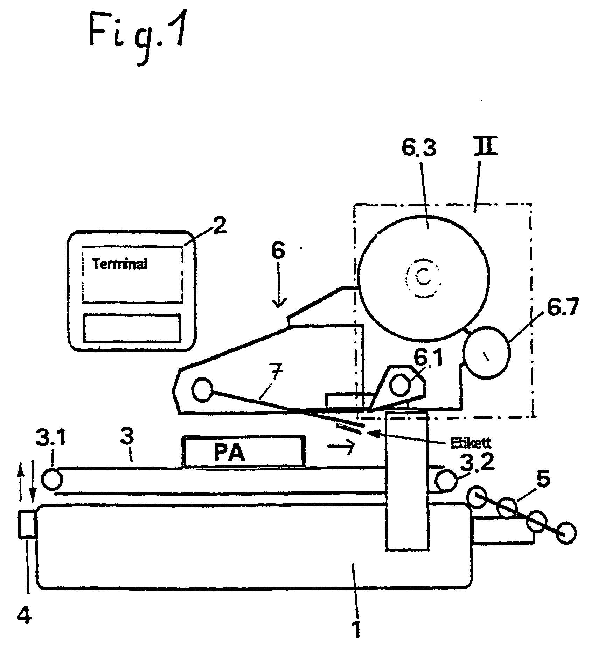

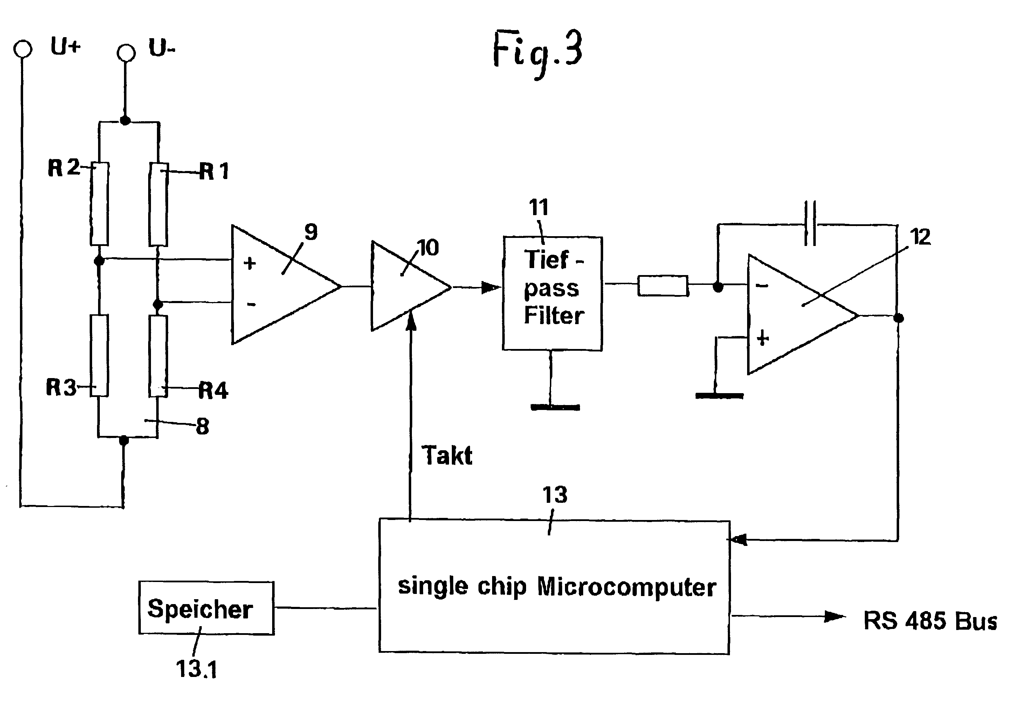

Figur 1 zeigt eine Vorrichtung zum Wägen und Etikettieren von Warenpackungen mit einer elektronischen Waage 1, die mit einer elektronischen Auswerteschaltung verbunden ist, welche in Figur 3 dargestellt ist und weiter unten näher erläutert wird. Sie enthält einen Rechner, der in Figur 1 nicht genauer gezeigt ist und von einem Terminal 2 aus gesteuert werden kann.

Die Lastaufnahmeeinrichtung, also die Waagschale der Waage 1 ist als Transportband 3 ausgebildet, dem Warenpackungen PA, von denen eine auf dem Transportband 3 liegend dargestellt ist, am vorderen Ende 3.1 durch eine nicht dargestellte Zuführvorrichtung oder von Hand zugeführt werden. Am vorderen Ende 3.1 des Transportbandes 3 befindet sich ein Sensor, beispielsweise eine Lichtschranke 4, durch welche der Auflaufzeitpunkt sowie die Größe einer Packung (durch Sensieren der vorderen und hinteren Kante) erfaßt werden. Die Erfassungswerte der Lichtschranke 4 werden in nicht eigens dargestellter Weise dem Rechner 13 der elektronischen Auswerteschaltung zugeführt und dort weiterverarbeitet. Am hinteren Ende 3.2 des Transportbandes 3 werden die gewogenen und etikettierten Packungen über eine Rollenbahn 5 abgeführt.

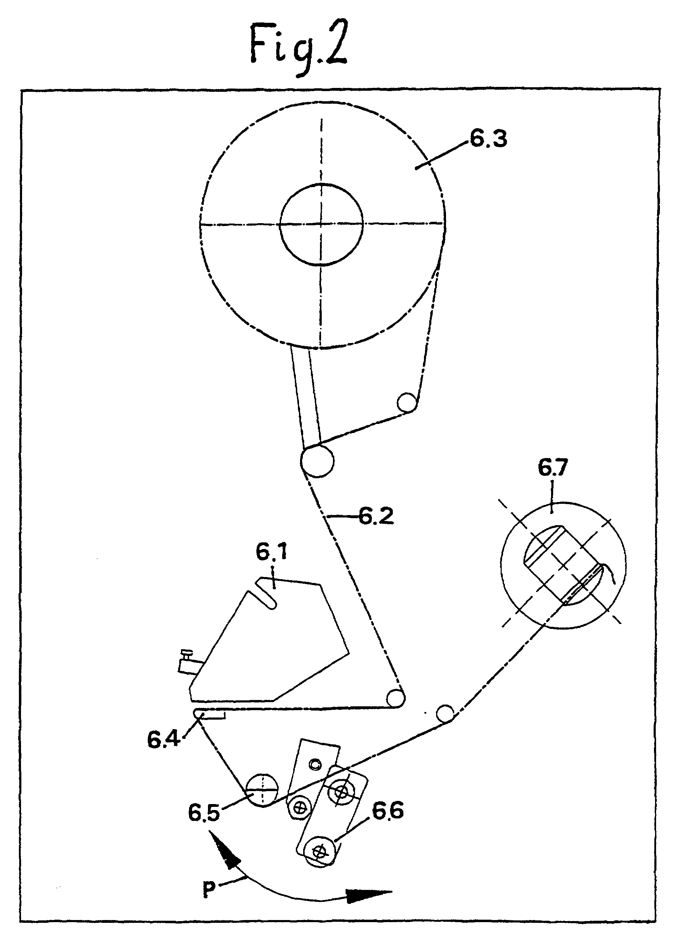

Oberhalb der Waage 1 ist im Bereich des Transportbandes 3 ein Etikettiersystem 6 an sich bekannter Bauart installiert (Figur 1 und 2), bei dem von einer Etikettenrolle 6.3 ein Trägerband 6.2 mit aufgebrachten Etiketten über verschiedene Umlenkrollen einem Druckwerk 6.1 zugeführt wird. Das Druckwerk 6.1 wird wie das ganze Etikettiersystem in an sich bekannter und nicht eigens dargestellter Weise vom Rechner 13 des elektronischen Auswertesystems her angesteuert.

Die Etiketten befinden sich an der Innenseite des von der Etikettenrolle 6.3 abgewickelten Trägerbandes 6.2. Nach dem Durchlaufen des Druckwerkes 6.1 läuft das Trägerband über eine scharfe Kante 6.4 abwärts. Vor dieser Stelle liegen die Etiketten an der Oberseite des Trägerbandes und werden durch die Führung über die scharfe Kante 6.4 abgelöst und der Unterseite eines in Figur 1 dargestellten Etikettierarms 7 zugeführt und dort in an sich bekannter und nicht eigens dargestellter Weise mittels Ansaugen festgehalten. Zum Etikettieren schwenkt der Etikettierarm 7 abwärts, um das Etikett auf die dann an einer vorgegebenen Stelle befindliche Packung aufzubringen. Das Trägerband 6.2 wird nach Umlaufen der scharfen Kante 6.4 über eine Antriebsrolle 6.5 zu einer Aufwickelvorrichtung 6.7 geführt. Der Antrieb erfolgt mittels einer anschwenkbaren Andruckrolle 6.6. Die Schwenkrichtung ist in Figur 2 durch den Pfeil P dargestellt.

Die Waage 1 besitzt in an sich bekannter Weise als Meßgerät eine DMS-Meßzelie 8, die in ein nicht dargestelltes Parallellenkersystem eingebaut ist, um alle auf die Waagschale einwirkenden Kräfte in die senkrechte Richtung umzuleiten. Die DMS-Meßzelle 8 besitzt vier gleiche Widerstände R1, R2, R3 und R4, die mäanderförmig auf ein Trägermaterial aufgebracht sind. wenn die Widerstände gedehnt werden, nimmt ihr elektrischer Widerstandswert zu, während eine Stauchung den Widerstandswert verringert. Die vier Widerstände R1 bis R4 sind wie aus Figur 3 ersichtlich in einer Brückenschaltung angeordnet, die an eine Spannungsquelle U+/U-angeschlossen ist. Die Brücke ist abgeglichen, wenn keine Kräfte auf die Waage ausgeübt werden, das heißt, wenn die Waage leer ist. Die sich bei Belastung der Waage ergebende relativ kleine Brückenspannung wird einem Differenzverstärker 9 und von diesem einer Abtast-Halte-Schaltung 10 zugeführt, deren Arbeitstakt vom Rechner 13 vorgegeben ist. Die Abtast-Halte-Schaltung 10 bewirkt eine zeitliche Diskretisierung der Meßwerte. Die erhaltenen Meßwerte durchlaufen ein Tiefpassfilter 11, das eine Grenzfrequenz von 3 Hz aufweist, um Störungen und Rauschen zu unterdrücken. Der dem Tiefpassfilter 11 nachgeschaltete Integrator 12 bewirkt eine weitere Tiefpassfilterung des erhaltenen Meßsignals, das dann dem Rechner 13 zur Weiterverarbeitung zugeführt wird. Dem Rechner 13 ist ein Speicher 13.1 zugeordnet. Die Weiterleitung der vom Rechner 13 erzeugten Signale erfolgt über eine Leitung RS 485 Bus.

Mit der in den Figuren 1 bis 3 dargestellten Vorrichtung wird das nachfolgend beschriebene wäge- und Etikettierungsverfahren durchgeführt.

Die Warenpackungen werden dem vorderen Ende 3.1 des Transportbandes 3 durch die Lichtschranke 4 hindurch zugeführt, mittels der der Auflaufzeitpunkt und die Größe der Packung erfaßt werden. Während des Zuführens läuft das Transportband 3 mit einer höheren Geschwindigkeit von etwa 40 - 60 m/s. Während des Auflaufens der Packung werden auf ein in das Druckwerk 6.1 eingelaufenes Etikett bereits die gewichtsunabhängigen Daten rechnergesteuert aufgedruckt. Wenn die Packung die Lichtschranke 4 verlassen hat, liegt sie vollständig auf dem Transportband 3 und damit auf der Waage 1. Die Geschwindigkeit des Transportbandes 3 wird dann auf 10 - 20 m/s reduziert und der Wägevorgang beginnt. Die optimalen Geschwindigkeiten des Transportbandes hängen von der Größe der Packung und vom gewählten Etikettierpunkt auf der Packung ab. Bei einer relativ langen Packung wird eine höhere Zuführgeschwindigkeit und Abführgeschwindigkeit gewählt, damit die Zeit für die Zuführung und die Abführung, während der nicht gewogen werden kann, verkürzt wird. Die Transportgeschwindigkeit während der Wägung wird bei einer langen Packung dagegen niedrig gewählt, da die Packung sonst den Etikettierpunkt erreichen kann, bevor das Etikett gedruckt ist. Eine eher mittlere Geschwindigkeit wird gewählt, wenn bei einer langen Packung das Etikett am Ende der Packung aufgebracht werden soll. Zur besseren Ausnutzung der Waage ist es weiterhin von Vorteil, wenn die Abführung der etikettierten Packung gleichzeitig mit der Zuführung der folgenden Packung geschieht. Die Waage wird dann durchgehend belastet und findet das Gewicht der nachfolgenden Packung schneller, weil sie nicht vollständig entlastet wird. Der Einschwingvorgang der Waage wird hierdurch erheblich verkürzt. Während die Packung langsam weitergefördert wird, ermittelt die Waage das Gewicht und der Rechner 13 berechnet aus dem Gewicht und dem eingespeicherten Grundpreis den Preis der Packung. Dieser Preis wird nach Abschluß des Wägevorgangs wiederum rechnergesteuert vom Druckwerk 6.1 auf das Etikett aufgedruckt.

Vorher wurde vom Rechner 13 in Verarbeitung der von der Lichtschranke 4 abgegebenen Signale unter Verwendung der bekannten Geschwindigkeiten des Transportbandes berechnet, zu welchem Zeitpunkt bzw. an welcher Stelle des Förderweges das Etikett mittels des Etikettierarms 7 auf die Packung aufgebracht wird. Dies geschieht dann durch Abschwenken des Etikettierarms 7 nach Abschluß des Wägevorgangs. Der Wägevorgang selbst erfolgt entsprechend der Diskretisierung mittels der Abtast-Halte-Schaltung 10 mit mehreren Meßwerten, die in der Auswerteschaltung miteinander verglichen werden. So können gestörte, außerhalb eines vorgegebenen Abweichungsbereiches liegende Meßwerte eliminiert werden.

Der durch das Aufbringen des Etiketts auf die Waage ausgeübte Impuls wird zunächst von der trägen Masse der das Transportband 3 enthaltenden Lastaufnahmevorrichtung der Waage 1 aufgenommen. Diese träge Masse kann beispielsweise 40 bis 70 % oder vorteilhaft 50 bis 60 % der Maximalbelastung der Waage betragen. So kann beispielsweise in einem praktischen Ausführungsbeispiel bei einem maximalen Packungsgewicht von 3 kg und einem zulässigen Gesamtmaximalgewicht von 15 kg das Gewicht der Waagschale etwa 8,5 kg betragen. Die träge Masse des Lastaufnahmesystems der Waage 1 bewirkt bereits eine Dämpfung der durch den Etikettiervorgang auf die Waage ausgeübten Erschütterung. Zusätzlich werden die aufgrund des verbleibenden kurzzeitigen Drucks auf die Waage erzeugten elektrischen Impulse ebenso wie durch den Transport erzeugte Impulse im elektrischen Auswertesystem durch das Tiefpassfilter 11 und die Filterwirkung des Integrators 12 herausgefiltert. Diese Filterung ist von besonderer Bedeutung, da alle auf die Waage ausgeübten Erschütterungen eine gewisse Zeit nachwirken und diese Nachwirkungen unbedingt abgeklungen sein müssen, bevor der nächste Wägevorgang einsetzen kann. Diese Abklingzeit begrenzt naturgemäß den Durchsatz an aufeinanderfolgenden Packungen. Um etwa alle 0,5 Sekunden einen Wägevorgang durchführen zu können, hat es sich als zweckmäßig erwiesen, das Filter auf eine Grenzfrequenz von 3 Hz auszulegen. Somit ist sichergestellt, daß das System mit ausreichender Schnelligkeit in die Nullage zurückkehrt.

Das Transportband 3 erfährt durch die Bewegung des Motors und der Antriebsgurte eine gewisse Unruhe, die sich in Störsignalen äußert. Das Spektrum dieser Störsignale ist abhängig von der Transportbandgeschwindigkeit. Die Störsignale des Transportbandes werden von der Meßzelle 8 der Waage erfaßt und führen zu einem Wägefehler. Das Tiefpassfilter 11 muß diese Fehler herausfiltern. Bei einer Grenzfrequenz von 3 Hz ist es möglich, das Transportband langsam laufen zu lassen und die Störsignale können herausgefiltert werden. Bei einer Heraufsetzung der Grenzfrequenz des Filters muß die Mindestgeschwindigkeit des Transportbandes ebenfalls heraufgesetzt werden, da sonst die Waage keinen gültigen Gewichtswert ermitteln kann, weil niederfrequente Störungen aufgrund langsamer Transportbandgeschwindigkeiten die Wägung verfälschen würden. Es hat sich aber herausgestellt, daß gerade bei langen Warenpackungen die Transportgeschwindigkeit während der Wägung nicht zu hoch sein darf. Ein noch weiteres Herabsetzen der Grenzfrequenz würde dagegen dazu führen, daß durch das Filter der Wägevorgang verlangsamt wird, da die sogenannte Gruppenlaufzeit des Filters ansteigt und das Wägeergebnis zeitlich später am Rechner 13 ankommt. Ein digitales Filter innerhalb des Rechners macht eine Mittelwertbildung der Meßwerte und eine anschließende Beurteilung möglich, ob sich das gemessene Gewicht noch ändert oder nicht. Wenn zwei aufeinanderfolgende Meßwerte eine vorgegebene Gewichtsdifferenz nicht überschreiten, gilt das Gewicht als stabil.

Die Geschwindigkeit des Transportbandes 3 wird entsprechend den vorliegenden Bedingungen eingestellt. Obwohl eine hohe Geschwindigkeit günstig wäre, weil dann alle auftretenden Störungen im höherfrequenten Bereich lägen, darf sie nicht zu hoch sein, weil sonst zu wenig Zeit für den Ablauf der verschiedenen Vorgänge zur Verfügung steht. Sie darf auch nicht zu niedrig gewählt werden, weil dann wieder sehr niederfrequente Schwingungen auftreten können, die nicht herausgefiltert werden können. Es hat sich herausgestellt, daß es, wie bereits erwähnt, zweckmäßig ist, mit Transportbandgeschwindigkeiten zu arbeiten, die während des Wägevorgangs und ggf. des Etikettiervorgangs bei etwa 10 - 20 m/s und beim Auflauf und Ablauf der Packung bei etwa 40 - 60 m/s liegen.

Es hat sich weiterhin als vorteilhaft erwiesen, wenn Störungen und Erschütterungen der Waage erfaßt werden und bei Überschreitung vorgegebener Grenzwerte mindestens während eines Teils des wägevorgangs die Fördergeschwindigkeit herabgesetzt wird, und zwar ggf. bis auf den Wert 0. Eine entsprechende Herabsetzung der Fördergeschwindigkeit kann durchgeführt werden, wenn eine Packung ein vorgegebenes Maximalgewicht überschreitet. Die wägung wird dann ggf. im Stillstand des Transportbandes zu Ende geführt. Hierdurch wird erreicht, daß eine vorgegebene Position des Etiketts auf der Packung immer eingehalten werden kann und es wird jede durchlaufende Packung gewogen und etikettiert. Damit wird der Nachteil einer Anlage, die im Durchlaufbetrieb arbeitet, vermieden, daß eine Packung unausgezeichnet durchläuft, weil die Waage das Gewicht nicht einwandfrei ermitteln konnte.

Nach dem Etikettieren wird die Packung über die Rollenbahn 5 abgeführt.

## Patentansprüche

1. Verfahren zum Wägen und Etikettieren von Warenpackungen, bei dem jede Packung einer elektronischen Waage zugeführt wird, die mit einer einen Rechner enthaltenden elektronischen Auswerteschaltung verbunden ist, durch welche das Packungsgewicht bestimmt und der zugeordnete Preis berechnet wird, wobei die Packung auf der Waage weitergefördert und nach dem Wägevorgang einem durch den Rechner gesteuerten Etikettiersystem zugeführt wird, durch welches ein Etikett bedruckt und auf die Packung aufgebracht wird, wonach die Packung abgeführt wird, **dadurch gekennzeichnet, daß** die Packung auf der Waage mindestens während des Wägevorgangs mit einer Geschwindigkeit weitergefördert wird, die kleiner ist als die Zuführgeschwindigkeit und die Abführgeschwindigkeit, und das Aufbringen des Etiketts nach Beendigung des Wägevorgangs auf der Waage selbst erfolgt, wobei Störungen der Waage aufgrund von Erschütterungen durch das Fördern und Etikettieren einerseits durch eine träge Masse der Lastaufnahmeeinrichtung, die größer ist als das maximal mögliche Gewicht einer zu wägenden Packung, und andererseits durch ein in der Auswerteschaltung angeordnetes Tiefpassfilter eliminiert werden.

2. Verfahren nach Anspruch 1, **dadurch gekennzeichnet, daß** das Etikett vor Beginn des Wägevorgangs mit den gewichtsunabhängigen Daten und nach Beendigung des Wägevorgangs mit den gewichtsabhängigen Daten bedruckt wird.

3. Verfahren nach Anspruch 1 oder 2, **dadurch gekennzeichnet, daß** der Auflaufzeitpunkt und die Größe der Packung sensorgesteuert erfaßt und aus diesen Werten und der vorgegebenen Fördergeschwindigkeit auf der Waage der Zeitpunkt der Etikettierung vom Rechner ermittelt und das Etikettiersystem entsprechend angesteuert wird.

4. Verfahren nach einem der Ansprüche 1 bis 3, **dadurch gekennzeichnet, daß** der Wägevorgang derart durchgeführt wird, daß in kurzen Zeitabständen mehrere aufeinanderfolgende Meßwerte aufgenommen werden, aus denen ein Mittelwert gebildet wird.

5. Verfahren nach Anspruch 4, **dadurch gekennzeichnet, daß** die Meßwerte eines Wägevorgangs miteinander verglichen und durch Erschütterungen der Waage gestörte, außerhalb eines vorgegebenen Abweichungsbereiches liegende Meßwerte eliminiert werden.

6. Verfahren nach einem der Ansprüche 1 bis 5, **dadurch gekennzeichnet, daß** Störungen und Erschütterungen der Waage erfaßt werden und bei Überschreitung vorgegebener Grenzwerte mindestens während eines Teils des Wägevorgangs die Fördergeschwindigkeit auf den Wert 0 gesetzt wird.

7. Verfahren nach einem der Ansprüche 1 bis 6, **dadurch gekennzeichnet, daß** bei Überschreitung eines vorgegebenen Maximalgewichts einer Warenpackung mindestens während eines Teils des Wägevorgangs die Fördergeschwindigkeit auf den Wert 0 gesetzt wird.

8. Verfahren nach einem der Ansprüche 1 bis 7, **dadurch gekennzeichnet, daß** die Zuführung einer zu wägenden Warenpackung im wesentlichen gleichzeitig mit der Abführung der vorhergehenden Warenpackung erfolgt.

9. Vorrichtung zur Durchführung des Verfahrens nach einem der Ansprüche 1 bis 8 mit einer elektronischen Waage, die mit einer einen Rechner enthaltenden elektronischen Auswerteschaltung verbunden ist und deren Lastaufnahmeeinrichtung als Transportband ausgebildet ist, und mit einer Zuführungs- und Abführungseinrichtung für die Packungen sowie einem durch den Rechner gesteuerten Etikettiersystem,
**dadurch gekennzeichnet, daß** das Etikettiersystem (6) im Bereich des Transportbandes (3) derart angeordnet ist, daß das Aufbringen eines Etiketts auf eine Packung während ihrer Weiterförderung auf dem Transportband (3) erfolgt und die das Transportband (3) einschließende Lastaufnahmeeinrichtung eine träge Masse besitzt, die größer ist als das maximale Gewicht der zu wägenden Packungen und in der elektronischen Auswerteschaitung mindestens ein Tiefpassfilter (11) mit einer Grenzfrequenz unterhalb 5 Hz angeordnet ist.

10. Vorrichtung nach Anspruch 9, **dadurch gekennzeichnet, daß** das Transportband (3) mindestens während des Wägevorgangs mit einer geringeren Geschwindigkeit antreibbar ist als während des Zuführungs- und Abführungsvorgangs.

11. Vorrichtung nach Anspruch 10, **dadurch gekennzeichnet, daß** die Geschwindigkeit des Transportbandes (3) während des Wägevorgangs im Bereich von ca. 10 - 20 m/s und während des Zuführungs- und Abführungsvorgangs im Bereich von ca. 40 - 60 m/s liegt.

12. Vorrichtung nach einem der Ansprüche 9 bis 11,
**dadurch gekennzeichnet, daß** am vorderen Ende (3.1) des Transportbandes (3) ein mit dem Rechner (13) verbundener Sensor (4) angeordnet ist zur Erfassung des Auflaufzeitpunktes und der Größe einer Packung und zur Steuerung der Transportbandgeschwindigkeit und/oder zur Berechnung des Zeitpunktes der Etikettierung und Ansteuerung des Etikettiersystems (6).

13. Vorrichtung nach einem der Ansprüche 9 bis 12, **dadurch gekennzeichnet, daß** die träge Masse der Lastaufnahmeeinrichtung (3) 40 bis 70 % der Maximalbelastung der Waage (1) beträgt.

14. Vorrichtung nach Anspruch 13, **dadurch gekennzeichnet, daß** die träge Masse der Lastaufnahmeeinrichtung 50 bis 60 % der Maximalbelastung der Waage (1) beträgt.

15. Vorrichtung nach einem der Ansprüche 9 bis 14,
**dadurch gekennzeichnet, daß** mindestens eines der Tiefpassfilter (11) eine Grenzfrequenz von höchstens 3 Hz aufweist.

16. Vorrichtung nach einem der Ansprüche 9 bis 15,
**dadurch gekennzeichnet, daß** die elektronische Auswerteschaltung einen Brückenkreis (8) aufweist, der über einen Differenzverstärker (9), eine Abtast-Halte-Schaltung (10) und einen Integrator (12) mit dem Rechner (13) verbunden ist und in diesem Schaltungszweig ein Tiefpassfilter (11) angeordnet ist.

17. Vorrichtung nach Anspruch 16, **dadurch gekennzeichnet, daß** das Tiefpassfilter (11) zwischen der Abtast-Halte-Schaltung (10) und dem Integrator (12) angeordnet ist.

18. Vorrichtung nach einem der Ansprüche 9 bis 17,
**dadurch gekennzeichnet, daß** im digitalen Bereich der Auswerteschaltung eine zusätzliche Tiefpassfilterung erfolgt.

## Claims

1. Method of weighing and labelling packages of goods, in which each package is supplied to electronic scales, which are connected to an electronic evaluating circuit including a computer, by means of which the package weight is determined and the appropriate price calculated, in which the package is conveyed onward on the scales and, after the weighing process, is supplied to a labelling system controlled by the computer, by which a label is printed and fixed on to the package, after which the package is carried away, **characterized in that** the package on the scales is conveyed at least during the weighing process at a speed which is less than the speed at which it is supplied and carried away, and following completion of the weighing process the label is affixed to the package on the scales themselves, problems with the scales due to vibrations or jolting during transport of the package and during labelling being eliminated on the one hand due to an inert mass of the load-carrying means which is greater than the maximum possible weight of a package to be weighed, and on the other hand by means of a low-pass filter disposed in the evaluating circuit.

2. Method according to Claim 1, **characterized in that**, prior to starting the weighing process, the label is printed with data which is independent of the weight and it is printed with the weight-dependent data following completion of the weighing process.

3. Method according to Claim 1 or 2, **characterized in that** the first moment of contact and the size of the package are detected by sensor means, and from these values and the preset conveying speed on the scales, the time of labelling is determined by the computer and the labelling system is activated accordingly.

4. Method according to one of Claims 1 to 3, **characterized in that** the weighing process is performed **in that** a plurality of successive measured values are taken at short intervals of time, from which an average value is taken.

5. Method according to Claim 4, **characterized in that** the measured values of a weighing process are compared with one another and measured values which are affected by vibrations of the scales and are outside a given range of deviation are eliminated.

6. Method according to one of Claims 1 to 5, **characterized in that** disturbances and vibrations of the scales are detected and, when given threshold values are exceeded, the conveying speed is set at the value '0' at least during one part of the weighing process.

7. Method according to one of Claims I to 6, **characterized in that** when a given maximum weight of a package of goods is exceeded, the conveying speed is set at the value '0' at least during one part of the weighing process.

8. Method according to one of Claims 1 to 7, **characterized in that** a package of goods to be weighed is essentially supplied at the same time as the preceding package of goods is carried away.

9. Apparatus for implementing the method according to one of Claims 1 to 8, comprising electronic scales, which are connected to an evaluating circuit including a computer and whose load-carrying means take the form of a conveyor belt, and means for supplying and carrying away the packages as well as a labelling system controlled by the computer, **characterized in that** the labelling system (6) is provided in the region of the conveyor belt (3), that a label is fixed on to a package during its continued progress along the conveyor belt (3), that the load-carrying means including the conveyor belt (3) have an inert mass which is greater than the maximum weight of the packages to be weighed, and that at least one low-pass filter (11), having a cut-off frequency below 5 Hz, is disposed in the electronic evaluating circuit.

10. Apparatus according to Claim 9, **characterized in that** the conveyor belt (3) can be driven, at least during the weighing process, at a slower speed than during the supply and removal processes.

11. Apparatus according to Claim 10, **characterized in that** the speed of the conveyor belt (3) lies within the range of approx 10 - 20 m/s during the weighing process and lies within the range of approx. 40 - 60 m/s during the supply and removal processes.

12. Apparatus according to one of Claims 9 to 11, **characterized in that** a sensor (4), which is connected to the computer (13), is disposed at the front end (3.1) of the conveyor belt (3) for detecting the first moment of contact and the size of a package and for controlling the speed of the conveyor belt and/or for calculating the time of labelling and of activation of the labelling system (6).

13. Apparatus according to one of Claims 9 to 12, **characterized in that** the inert mass of the load-carrying means (3) is 40 to 70% of the maximum load of the scales (1).

14. Apparatus according to Claim 13, **characterized in that** the inert mass of the load-carrying means is 50 to 60% of the maximum load of the scales (1).

15. Apparatus according to one of Claims 9 to 14, **characterized in that** at least one of the low-pass filters (11) has a cut-off frequency of a maximum of 3 Hz.

16. Apparatus according to one of Claims 9 to 15, **characterized in that** the electronic evaluating circuit has a bridge circuit (8), which is connected to the computer (13) by way of a differential amplifier (9), a scanning/holding circuit (10) and an integrator (12), and a low-pass filter (11) is disposed in this branch of circuit.

17. Apparatus according to Claim 16, **characterized in that** the low-pass filter (11) is disposed between the scanning/holding circuit (10) and the integrator (12).

18. Apparatus according to one of Claims 9 to 17, **characterized in that** an additional low-pass filtering is effected in the digital region of the evaluating circuit.

## Revendications

1. Procédé de pesage et d'étiquetage de paquets de marchandises, dans lequel chaque paquet est amené à une balance électronique qui est reliée à un circuit électronique d'exploitation contenant un calculateur, qui détermine le poids du paquet et calcule le prix correspondant, le paquet étant avancé sur la balance et, après l'opération de pesage, conduit à un système d'étiquetage commandé par le calculateur, qui imprime une étiquette et l'applique sur le paquet, après quoi le paquet est évacué, **caractérisé par le fait que** le paquet est avancé sur la balance au moins pendant l'opération de pesage à une vitesse qui est inférieure à la vitesse d'amenée et à la vitesse d'évacuation, et l'application de l'étiquette a lieu après la fin de l'opération de pesage sur la balance elle-même, les perturbations de la balance en raison des secousses produites par le transport et l'étiquetage étant éliminées d'une part par une masse inerte du dispositif récepteur de charge qui est supérieure au poids maximal possible d'un paquet à peser, et d'autre part par un filtre passe-bas prévu dans le circuit d'exploitation.

2. Procédé selon la revendication 1, **caractérisé par le fait que** sur l'étiquette sont imprimées, avant le début de l'opération de pesage, les données indépendantes du poids et, après la fin de l'opération de pesage, les données dépendant du poids.

3. Procédé selon l'une des revendications 1 et 2, **caractérisé par le fait que** l'instant d'accostage et la dimension du paquet sont saisis sous la commande de capteurs, et à partir de ces valeurs et de la vitesse fixée de transport sur la balance, l'instant de l'étiquetage est déterminé par le calculateur et le système d'étiquetage est déclenché en conséquence.

4. Procédé selon l'une des revendications 1 à 3, **caractérisé par le fait que** l'opération de pesage est effectuée de façon telle que plusieurs valeurs mesurées successives soient prises à de courts intervalles de temps et la moyenne de celles-ci soit établie.

5. Procédé selon la revendication 4, **caractérisé par le fait que** les valeurs mesurées d'une opération de pesage sont comparées entre elles et les valeurs mesurées perturbées par les secousses de la balance et situées à l'extérieur d'un domaine fixé d'écart sont éliminées.

6. Procédé selon l'une des revendications 1 à 5, **caractérisé par le fait que** les perturbations et les secousses de la balance sont détectées, et en cas de dépassement de valeurs limites fixées au moins pendant une partie de l'opération de pesage, la vitesse de transport est fixée à la valeur zéro.

7. Procédé selon l'une des revendications 1 à 6, **caractérisé par le fait qu'**en cas de dépassement d'un poids maximal fixé d'un paquet de marchandises au moins pendant une partie de l'opération de pesage, la vitesse de transport est fixée à la valeur zéro.

8. Procédé selon l'une des revendications 1 à 7, **caractérisé par le fait que** l'amenée d'un paquet de marchandises à peser a lieu sensiblement en même temps que l'évacuation du paquet de marchandises précédent.

9. Dispositif pour la mise en oeuvre du procédé selon l'une des revendications 1 à 8, comportant une balance électronique qui est reliée à un circuit électronique d'exploitation contenant un calculateur et dont le dispositif récepteur de charge est constitué d'une bande transporteuse, un dispositif d'amenée et d'évacuation des paquets et un système d'étiquetage commandé par le calculateur, **caractérisé par le fait que** le système d'étiquetage (6) est placé dans la zone de la bande transporteuse (3) de façon telle que l'application d'une étiquette sur un paquet ait lieu pendant l'avancement de celui-ci sur la bande transporteuse (3), et le dispositif récepteur de charge comprenant la bande transporteuse (3) possède une masse inerte qui est supérieure au poids maximal des paquets à peser, et dans le dispositif électronique d'exploitation est prévu au moins un filtre passe-bas (11) ayant une fréquence de coupure inférieure à 5 Hz.

10. Dispositif selon la revendication 9, **caractérisé par le fait que** la bande transporteuse (3) peut, au moins pendant l'opération de pesage, être mue à une plus petite vitesse que pendant l'opération d'amenée et d'évacuation.

11. Dispositif selon la revendication 10, **caractérisé par le fait que** la vitesse de la bande transporteuse (3) est comprise entre environ 10 et 20 m/s pendant l'opération de pesage et entre environ 40 et 60 m/s pendant l'opération d'amenée et d'évacuation.

12. Dispositif selon l'une des revendications 9 à 11, **caractérisé par le fait qu'**à l'extrémité avant (3.1) de la bande transporteuse (3) est placé un capteur (4) relié au calculateur (13) pour la saisie de l'instant d'accostage et de la dimension d'un paquet et pour la commande de la vitesse de la bande transporteuse et/ou pour le calcul de l'instant d'étiquetage et le déclenchement du système d'étiquetage (6).

13. Dispositif selon l'une des revendications 9 à 12, **caractérisé par le fait que** la masse inerte du dispositif récepteur de charge (3) est de 40 à 70 % de la charge maximale de la balance (1).

14. Dispositif selon la revendication 13, **caractérisé par le fait que** la masse inerte du dispositif récepteur de charge est de 50 à 60 % de la charge maximale de la balance (1).

15. Dispositif selon l'une des revendications 9 à 14, **caractérisé par le fait qu'**au moins un des filtres passe-bas (11) a une fréquence de coupure d'au plus 3 Hz.

16. Dispositif selon l'une des revendications 9 à 15, **caractérisé par le fait que** le circuit électronique d'exploitation présente un montage en pont (8) qui est relié au calculateur (13) par l'intermédiaire d'un amplificateur différentiel (9), d'un échantillonneur bloqueur (10) et d'un intégrateur (12), et dans cette branche de circuit est monté un filtre passe-bas (11).

17. Dispositif selon la revendication 16, **caractérisé par le fait que** le filtre passe-bas (11) est monté entre l'échantillonneur bloqueur (10) et l'intégrateur (12).

18. Dispositif selon l'une des revendications 9 à 17, **caractérisé par le fait que** dans la partie numérique du circuit d'exploitation a lieu un filtrage passe-bas supplémentaire.
